# EUROPEAN PATENT SPECIFICATION

(11) **EP 3 501 293 B1**
(45) Date of publication and mention of the grant of the patent: **10.11.2021**
(21) Application number: 18000628.0
(22) Date of filing: 26.07.2018
(51) Int. Cl.: A23L 11/00, A23J 3/16, A23J 3/26, A23P 30/20

(54) **METHOD FOR PRODUCING A LEGUME-BASED FOOD PRODUCT AND FOOD PRODUCT OBTAINED THEREFROM**
VERFAHREN ZUR HERSTELLUNG EINES NAHRUNGSMITTELS AUF LEGUMBASIS UND DARAUS HERGESTELLTES NAHRUNGSMITTEL
PROCÉDÉ DE PRODUCTION D'UN PRODUIT ALIMENTAIRE À BASE DE LÉGUMES ET PRODUIT ALIMENTAIRE OBTENU À PARTIR DE CELUI-CI

(30) Priority: 19.12.2017 CH 15562017
(43) Date of publication of application: 26.06.2019
(73) Proprietor: Guglielmana, Gianfranco, 6962 Viganello, Lugano (CH)
(72) Inventor: Guglielmana, Gianfranco, 6962 Viganello, Lugano (CH)
(74) Representative: Luppi, Emanuele

(56) References cited:
- EP-A1- 3 155 903
- WO-A1-2015/158960
- US-A- 5 087 470
- US-A- 5 296 253
- US-A- 5 989 620
- US-A1- 2008 145 483
- US-A1- 2011 256 293
- US-A1- 2013 022 732

## Description

### Technical Field

The present invention relates to a method for producing a legume-based food product. More precisely, the invention relates to a method for producing legume-based alimentary pasta

### Prior Art

Alimentary pasta is a food product mainly obtained, in all its forms, from flour and water. Alimentary pasta, or simply dry pasta, to which the consumer is accustomed, is obtained, as is known, from durum wheat flour. There are, however, several varieties of pasta made from different flours: common wheat flour (this is the case of fresh egg pasta), buckwheat flour, whole meal flour, spelt wheat flour and so on.

In recent times, owing to the increase in food intolerances, various pasta factories have begun producing pastas starting from gluten-free flours, obtained for example from rice or corn. One such pasta is made from legume flour.

Legumes have numerous and important nutritional properties classifiable as:
- energy and macronutrients;
- mineral salts and vitamins.

Energy and macronutrients: fresh legumes bring a rather heterogeneous energy quantity. It ranges from 40kcal/100g of broad beans, which, as is known, contain a low amount of calories, to 115kcal/100g of lupins. Most of the energy introduced comes from carbohydrates. These, even after cooking and the related increase in digestibility, have a moderate glycemic index (also thanks to the abundance of dietary fiber). The proteins contained in legumes represent about 1/3 of the total kcal. Although they have a modest biological value, they are only deficient in methionine and cysteine; it follows that by associating them with other proteins rich in these two amino acids (like those of cereals), they can reach a biological value similar to that of animal proteins. The contained lipids are polyunsaturated, therefore of good quality, but quantitatively irrelevant (1/15 of the total calories).

Mineral salts and vitamins: legumes provide excellent quantities of iron, potassium and phosphorus. The bioavailability of these minerals is limited, but considering that, for example, almost no fertile woman reaches the recommended daily quota of iron (18mg/day) with nutrition, supplementing the diet with legumes can allow to get closer to these values. Vitamins typical of legumes are mainly thiamin, niacin, folic acid and biotin.

A diet rich in legume-based food products, such as legume-based pasta, capable of preserving the aforesaid nutritional properties of legumes would therefore bring a significant nutritional benefit to the consumer.

The document US5296253 describes, for example, a food product based on cereals and/or legumes, with intermediate humidity, and a method for producing said product. The described method mainly comprises the steps of: cooking cereals and/or legumes under conditions capable of maintaining the % of water in cereals/legumes between 20 and 60% (the preferred technology being steam-cooking); mixing the cooked cereals/legumes with fats, oils, or sweeteners, moisturizing agents, salts, food acids, flavoring agents or preservatives to obtain a dough mixture; pasteurizing the mixture; producing a fluid food product having a total water content between 20 and 45%; cooling and shaping the food product into the desired shape. An embodiment of the invention provides for drying and grinding the product. Another embodiment of the invention provides for a step of extrusion at a temperature between about 212 and 350°C.

The described method has, however, some drawbacks: firstly, the use of high temperatures (> 100°C), especially during extrusion, causes the denaturation of legumes and therefore the loss of nutritional properties. Furthermore, the addition of substances such as fats, oils, sweeteners, moisturizing agents, salts, food acids, flavoring agents or preservatives to the mixture leads to the obtainment of a non-100% natural end product, which is a relevant factor for the enjoyment of the consumer, increasingly looking for totally (100%) natural food products.

EP 3 155 903 discloses a differente process of how to improve the nutritional value of a textured food product manufactured by cooking and extruding legume protein. In particular, after the extrusion treatment, the post extrusion treatment is carried out by additional high pressure cooking step performed in an autoclave, preferably having a pressure of at least 0,9 bar, and preferably for 30 to 60 minutes, such as for 35 to 45 minutes.

WO 2015/158960 discloses a method comprising the steps of grinding faba beans, subjecting the ground faba beans to fractionation by air classification, separating a fraction having average particle size of about D50 = 20 -100 µm and D90 = 40 -150 µm, and blending gluten-free flour comprising the separated fraction, with water to obtain pasta dough.

An object of the present invention is to provide a solution to the aforesaid problems that is free from the drawbacks of prior art.

A further object of the invention is to provide a solution which can be easily realized and which is appealing to the final consumer.

A not least object of the invention is to provide a method for producing a legume-based food product that can be realized on an industrial scale in a cost-effective way.

These and other objects are achieved with the method for producing a legume-based food product.

### Disclosure of the Invention

The method for producing a legume-based food product according to the present invention comprises the steps according to claim 1.

More particularly, said food product is a legume-based alimentary pasta.

By the word "pasta" it is meant a dough made of flour and water suitably stirred until it becomes firm and compact and, once risen, is used for making bread, whereas, when unfermented, processed into different shapes and dried, it forms various types of alimentary pasta or simply pasta.

The steps of the method according to the present invention are described in greater detail here below.

The first steps of the method according to the invention provide that, after providing an amount of seeds of at least one kind of legumes, these seeds are preferably hydrated with water and subsequently conveyed, by means of a continuous process exploiting movement of an automated conveyor belt, within a tube preferably made of stainless steel, having a length of about 8 m and a diameter of about 1 m, arranged vertically, perpendicularly to the floor. Said tube is preferably a tube comprising two ends, namely an upper end and a lower end, wherein the upper end, located at about 8 m from the floor, includes a closing door. Preferably, the conveyor belt conveys the legume seeds so as to bring them close to the door of the upper end of the tube. The step of steam-cooking the legume seeds by injecting water vapor at a temperature of 100°C takes place within said tube. Preferably, said water vapor is injected into the tube by means of nozzles arranged on the inner side of the lateral surface of the tube. In the proximity of the lower end of the tube, rollers are preferably provided which, by rotating slowly, extract the cooked legume seeds from the tube and make them flow onto a conveyor belt which conveys them into a dryer. The cooking process is therefore a continuous process: as the cooked seeds are extracted inferiorly from the tube by means of the rollers, an equivalent mass of raw legume seeds is conveyed superiorly into the tube through the door and the automated conveyor belt. Within the dryer, the previously cooked legume seeds are dried until a humidity between 9% and 20% is reached.

After drying, the legume seeds are ground, thus obtaining a legume seed flour. Said flour is then preferably sieved. The sieved flour preferably, though not exclusively, has a grain size of about 0,25 µm.

Preferably, the step of providing an amount of at least one kind of legumes comprises the step of providing an amount of white beans and/or black beans and/or chickpeas and/or lentils and/or cowpeas and/or soya beans.

The steam-cooking step allows advantageous gelling of the starch contained in the legumes, which starch, by absorbing the water vapor, hydrates and swells. However, by raising the cooking temperature over 100°C, the legume would undergo denaturation. This aspect is due to the fact that a higher grade of gelling of the starch corresponds to a higher cooking temperature, this involving appearance of a gum-like texture upon chewing and loss of nutritional properties of the legume. By cooking, instead, at a temperature of 100°C the advantage is gained that a sufficient grade of gelling of the starch is reached, which is useful in order to preserve the nutritional properties contained in the legumes and obtain a starting material with good performance for processing.

According the invention the obtained flour is, mixed with water only, thus obtaining a dough. The water percentage varies between 20% and 40% in weight, depending on the humidity of the flour, on the format to be subsequently extruded and to weather conditions. The water is preferably micro-filtered water having a temperature between 1 and 50°C and more preferably between 25 and 50°C. Said step of mixing flour with water is preferably carried out for a period of time between 5 and 30 minutes. Said period of time varies depending on the humidity of the legumes and the water retention capacity of the flour, the latter feature depending, in turn, on the parameters chosen for carrying out the steam-cooking step: the higher is the grade of cooking of the legumes, the greater is the percentage of water by weight that needs to be added.

According to the present invention the obtained dough is extruded. Said extrusion step takes place by using an equipment comprising mainly at least one extrusion vessel and at least one auger.

Preferably, the extrusion vessel comprises a lid made of plexiglas and a gasket, said lid and gasket allowing, by using a vacuum pump, to extract the air contained in the vessel and consequently to generate vacuum conditions within the extrusion vessel itself. This step has the advantage that it prevents air bubbles from forming within the extruded dough, which air bubbles, if present, might make the extruded dough brittle. By the term "brittle" it is meant "prone to breaking". If vacuum conditions were not established within the extrusion vessel, tiny air bubbles would be generated within the extruded dough, which bubbles would in turn create, during the following drying step, tiny cracks within the extruded dough, with consequent breaking of the end product during boiling (the cooking necessary for making the end product edible by the consumer).

During the extrusion step, a pressure between 70 and 150 bar is applied within the auger of the equipment. The choice of the pressure to be applied varies depending on the humidity of the dough and to the kind of die that will then be connected to the equipment. The pressure is preferably measured by means of an analog pressure gauge.

Within the auger, during the extrusion step, a strong friction between the dough and the walls of the auger itself is generated, which causes the temperature to rise. For this reason, the extrusion step further comprises, a step of cooling the auger on its outside by using water having a temperature between 5 and 25°C. Preferably, the water is brought to the desired temperature by a closed-cycle refrigerator connected to the auger and subsequently injected into a casing arranged outside the auger.

This step of cooling the auger has the advantage of denaturing as little as possible the dough to be extruded.

Preferably at least one die and at least one cutting device are connected to the extrusion equipment, in order to draw and cut the extruded dough, thus obtaining a crude product. Still more preferably, one die and one cutting device are connected to the equipment.

In this step, the extruded dough takes the shape of the connected die and is cut by a cutting device, for example a knife, creating a crude product having the shape, for example, of a so-called "fusillo", "tagliatella", "maccherone rigato", "penna rigata", "treccia", "pacchero" and so on. Depending on the kind of die and cutting device that are chosen, a crude product is obtained having a different maximum thickness, i.e. a different product thickness, (so-called "cartella").

According to the present invention the crude product obtained during the preceding drawing and cutting step is processed by means of a shaker pre-dryer (so-called "trabatto").

More particularly, said step provides, preferably, that the crude product falls onto a mobile mat which, by conveying it into a shaker pre-dryer having a temperature between 25 and 60°C, allows processing thereof. This step allows formation of a pre-package on the crude product. By "formation of a pre-package" it is meant the formation of a thin crust over the outer surface of the crude product. The presence of such pre-package prevents the outer surface of the crude product from having a sticky texture. The temperature of the shaker pre-dryer varies depending on the chosen die, and therefore on the shape of the crude product, as well as on the humidity present during obtainment of the dough.

According to the present invention the processed crude product is dried, by means of a dryer, thus obtaining a legume-based food product.

More particularly, said step preferably provides that the processed crude product, exiting the shaker pre-dryer, is conveyed onto trays which, once stacked, will be positioned within the dryer.

The step of drying the processed food product, according to the present invention, comprises at least one working cycle, operating over a period of time between 100 and 1000 minutes, said working cycle in turn comprising the steps of:
- setting the dryer to a temperature between 40 and 60°C;
- setting the relative humidity within the dryer between 35% and 90%;
- venting the inside of the dryer over a period of time between 1 and 20 minutes;
- stopping venting within the dryer over a period of time between 2 and 15 minutes.

Preferably, said cycles are in a number comprised between one and nine and each cycle is advantageously independent from the other ones. Advantageously, indeed, it is possible to set the parameters of the single steps (temperature, humidity, venting of the dryer) with different values from one cycle to another.

The aim of the drying step is to gradually extract water from the crude. product. In order to achieve this aim, the method according to the present invention advantageously provides for carrying out several mutually independent working cycles by using different parameters. A preferred embodiment of the present invention comprises a first working cycle, operating on a crude product rich in water, in which the step of venting the inside of the dryer is carried out over a period of time longer than that of the step in which venting is stopped; a second working cycle in which the step of venting and the step of stopping venting are carried out over an almost equivalent period of time, and a third working cycle in which the venting step is carried out over a period of time shorter than that of the step in which venting is stopped.

This is because in the first working cycle the crude product to be dried, being rich in water, is more capable of expelling water, by exudation, during the step in which venting is stopped. In the third working cycle, instead, the crude product to be dried is poorer in water, since much of the water has been expelled during the preceding two cycles. In this third working cycle, indeed, the greatest water concentration is present in the "core" of the product, whereby a longer step of stopping venting will be required in order to allow the water contained in the "core" of the product to exit by exudation.

According to a preferred embodiment of the present invention, the drying temperature is between 40 and 60°C and depends on the quantity of crude product to be dried and on the humidity of the dough.

The relative humidity of the dryer is between 35% and 90% and depends on the quantity of crude product to be dried and on the humidity of the dough.

The duration of the step of venting the inside of the dryer is between 1 and 20 minutes and depends on the quantity and shape of the crude product to be dried and on the maximum thickness of the product.

The duration of the step in which venting of the inside of the dryer is stopped has a duration between 2 and 15 minutes and depends on the quantity and shape of the crude product to be dried and on the maximum thickness of the product.

Also the number of working cycles depends on the quantity and shape of the crude product to be dried and from the humidity contained in the dough.

According to another embodiment of the method according to the present invention, the step of drying the processed crude product comprises a single working cycle.

The method according to the present invention advantageously allows to obtain a legume-based food product appealing to the consumer, rich in legume-derived nutritional properties, 100% natural and of high quality.

The method according to the present invention has several advantages: firstly, said method allows to obtain a product sellable on the market, appealing to the consumer and being of high quality, by maintaining low temperatures (≤ 100°C) during all production steps. More particularly, the temperature is advantageously kept at about 100°C only during the step of steam-cooking the legume seeds, whereas in all the other steps of the method according to the present invention preferably the temperature never exceeds 60°C (≤ 60°C).

A further advantage of the method according to the present invention is that the legume flour is mixed with water only. The method according to the present invention, indeed, does not provide for the addition of milk, butter, eggs, thickening agents, isolated proteins, gluten-rich components, enzymes, and therefore it allows to obtain a legume-based, 100% natural food product.

A further advantage of the method according to the present invention derives from the drying step as described. This kind of drying, owing to the use of low temperatures (≤ 100°C) as well as to working cycles with independently settable parameters, allows to obtain a legume-based food product rich in all the nutritional properties naturally occurring in legumes.

### Example of the Drying Step

A specific example of how to carry out the step of drying, by means of a dryer, the processed crude product according to the present invention is described here below.

300 kg of large "paccheri" (processed crude product) are subjected to the following drying step.

First working cycle: temperature within the dryer 50°C; relative humidity within the dryer 70%; venting minutes within the dryer 8 minutes; minutes over which venting is stopped within the dryer 3 minutes; total duration of the first cycle 250 minutes.

Second working cycle: temperature within the dryer 50°C relative humidity within the dryer 62%; venting minutes within the dryer 8 minutes; minutes over which venting is stopped within the dryer 4 minutes; total duration of the second cycle 200 minutes.

Third working cycle: temperature within the dryer 50°C; relative humidity within the dryer 56%; venting minutes within the dryer 6 minutes; minutes over which venting is stopped within the dryer 6 minutes; total duration of the third cycle 150 minutes.

Fourth working cycle: temperature within the dryer 50°C; relative humidity within the dryer 48%; venting minutes within the dryer 3 minutes; minutes over which venting is stopped within the dryer 8 minutes; total duration of the fourth cycle 170 minutes.

Fifth working cycle: temperature within the dryer 50°C; relative humidity within the dryer 38%; venting minutes within the dryer 3 minutes; minutes over which venting is stopped within the dryer 11 minutes; total duration of the fifth cycle 160 minutes.

Sixth working cycle: temperature within the dryer 50°C; relative humidity within the dryer 36%; venting minutes within the dryer 2 minutes; minutes over which venting is stopped within the dryer 11 minutes; total duration of the sixth cycle 220 minutes.

## Claims

1. Method for producing a legume-based food product, comprising the steps of:
- providing an amount of seeds belonging to at least one legume species;
- steam-cooking said amount of seeds by hydrating them and cooking with water vapor at a temperature of 100°C;
- drying the seeds that have been previously steam-cooked until a humidity between 9% and 20% is reached;
- grinding the cooked, dried seeds, thus obtaining a flour;
- mixing the flour with water only, thus obtaining a dough;
- extruding the obtained dough and extracting the air to generate vacuum conditions;
- drawing and cutting the extruded dough, thus obtaining a crude product;
- processing the crude product by means of a shaker pre-dryer;
- drying, by means of a dryer, the processed crude product, thus obtaining a legume-based food product,
wherein the step of drying the processed crude product comprises at least one working cycle, operating over a period of time comprised between 100 and 1000 minutes, said cycle in turn comprising the steps of:
- setting the drying to a temperature between 40 and 60°C;
- setting the relative humidity within the dryer between 35% and 90%;
- venting the inside of the dryer over a period of time between 1 and 20 minutes;
- stopping venting within the dryer over a period of time between 2 and 15 minutes,
wherein the extrusion step comprises the steps of generating vacuum conditions within the at least one extrusion vessel, applying a pressure between 70 and 150 bar to the at least one auger, and cooling the at least one auger on its outside by using water having a temperature between 5 and 25°C.

2. Method, according to claim 1, wherein said food product is a legume-seed-based alimentary pasta.

3. Method according to claim 1 or 2, wherein the step of providing an amount of seeds belonging to at least one legume species comprises the step of providing an amount of white beans and/or black beans and/or chickpeas and/or lentils and/or cowpeas and/or soya beans.

4. Method according to any of the preceding claims, wherein said step of mixing the flour with water comprises the step of mixing, over a period of time between 5 and 30 minutes, the flour with 20-40% by weight of micro-filtered water having a temperature between 25 and 50°C.

5. Method according to any of the preceding claims, wherein the step of extruding the dough comprises the step of extruding by means of an equipment comprising mainly at least one extrusion vessel and at least one auger.

6. Method according to any of the preceding claims, wherein the step of processing the crude product by means of a shaker pre-dryer comprised the step of processing by means of a shaker pre-dryer having a temperature between 25 and 60°C.

## Patentansprüche

1. Verfahren zur Herstellung eines Nahrungsmittels auf der Basis von Hülsenfrüchten, das die folgenden Schritte umfasst:
- Bereitstellen einer Menge von Samen, die zu mindestens einer Hülsenfruchtart gehören;
- Dampfgaren der Samenmenge durch Hydratisierung und Kochen mit Wasserdampf bei einer Temperatur von 100°C;
- Trocknen der zuvor dampfgegarten Samen, bis eine Feuchtigkeit zwischen 9 und 20 % erreicht ist;
- Mahlen der gegarten und getrockneten Samen, um ein Mehl zu erhalten;
- Mischen des Mehls nur mit Wasser, um einen Teig zu erhalten;
- Extrudieren des erhaltenen Teigs und Absaugen der Luft, um ein Vakuum zu erzeugen;
- Ziehen und Schneiden des extrudierten Teigs, um ein Rohprodukt zu erhalten;
- Verarbeiten des Rohprodukts mit Hilfe eines Schüttelvortrockners;
- Trocknen des verarbeiteten Rohprodukts mit Hilfe eines Trockners, wodurch ein Nahrungsmittel auf der Basis von Hülsenfrüchten erhalten wird,
wobei der Schritt des Trocknens des verarbeiteten Rohprodukts mindestens einen Arbeitszyklus umfasst, der einen Zeitraum zwischen 100 und 1.000 Minuten umfasst, wobei der Zyklus wiederum die folgenden Schritte umfasst:
- Einstellen der Trocknung auf eine Temperatur zwischen 40 und 60°C;
- Einstellen der relativen Luftfeuchtigkeit innerhalb des Trockners zwischen 35% und 90%;
- Lüften des Inneren des Trockners über einen Zeitraum zwischen 1 und 20 Minuten,
- Beenden des Lüftens innerhalb des Trockners über einen Zeitraum zwischen 2 und 15 Minuten,
wobei der Extrusionsschritt die Schritte des Erzeugens von Vakuumbedingungen innerhalb des mindestens einen Extrusionsbehälters, des Anlegens eines Drucks zwischen 70 und 150 bar an die mindestens eine Schnecke und des Kühlens der mindestens einen Schnecke an ihrer Außenseite durch Verwendung von Wasser mit einer Temperatur zwischen 5 und 25°C umfasst.

2. Verfahren nach Anspruch 1, wobei das Nahrungsmittel eine Nahrungsmittelpasta auf der Basis von Hülsenfrüchten ist.

3. Verfahren nach Anspruch 1 oder 2, wobei der Schritt des Bereitstellens einer Menge von Samen, die zu mindestens einer Hülsenfruchtart gehören, den Schritt des Bereitstellens einer Menge von weißen Bohnen und/oder schwarzen Bohnen und/oder Kichererbsen und/oder Linsen und/oder Kuhbohnen und/oder Sojabohnen umfasst.

4. Verfahren nach einem der vorhergehenden Ansprüche, wobei der Schritt des Mischens des Mehls mit Wasser den Schritt des Mischens des Mehls mit 20-40 Gew.-% mikrogefiltertem Wasser mit einer Temperatur zwischen 25 und 50°C über einen Zeitraum von 5 bis 30 Minuten umfasst.

5. Verfahren nach einem der vorhergehenden Ansprüche, wobei der Schritt des Extrudierens des Teigs den Schritt des Extrudierens mittels einer Anlage umfasst, die hauptsächlich mindestens einen Extrusionsbehälter und mindestens eine Schnecke umfasst.

6. Verfahren nach einem der vorhergehenden Ansprüche, wobei der Schritt des Verarbeitens des Rohprodukts mit Hilfe eines Schüttelvortrockners den Schritt des Verarbeitens mittels eines Schüttelvortrockners mit einer Temperatur zwischen 25 und 60°C umfasst.

## Revendications

1. Procédé de production d'un produit alimentaire à base de légumes, comprenant les étapes de :
- fourniture d'une quantité de graines appartenant à au moins une espèce de légume ;
- cuisson à la vapeur de ladite quantité de graines par hydratation de celles-ci et cuisson à la vapeur d'eau à une température de 100 °C :
- séchage des graines qui ont été préalablement cuites à la vapeur jusqu'à ce qu'une humidité entre 9 % et 20 % soit atteinte ;
- broyage des graines cuites et séchées, obtenant ainsi une farine ;
- mélange de la farine avec de l'eau uniquement, obtenant ainsi une pâte ;
- extrusion de la pâte obtenue et extraction de l'air pour générer des conditions de vide ;
- étirage et découpe de la pâte extrudée, obtenant ainsi un produit brut ;
- transformation du produit brut au moyen d'un pré-séchoir à secousses ;
- séchage, au moyen d'un séchoir, du produit brut transformé, obtenant ainsi un produit alimentaire à base de légumes,
dans lequel l'étape de séchage du produit brut transformé comprend au moins un cycle de travail, fonctionnant sur une période de temps comprise entre 100 et 1 000 minutes, ledit cycle comprenant à son tour les étapes de :
- réglage du séchage à une température entre 40 et 60 °C ;
- réglage de l'humidité relative à l'intérieur du séchoir entre 35 % et 90 % ;
- purge de l'intérieur du séchoir sur une période de temps entre 1 et 20 minutes ;
- arrêt de la purge à l'intérieur du séchoir sur une période de temps entre 2 et 15 minutes,
dans lequel l'étape d'extrusion comprend les étapes de génération de conditions de vide à l'intérieur de l'au moins un récipient d'extrusion, application d'une pression entre 70 et 150 bar sur l'au moins une vis sans fin, et refroidissement de l'au moins une vis sans fin sur son extérieur en utilisant une eau ayant une température entre 5 et 25 °C.

2. Procédé, selon la revendication 1, dans lequel ledit produit alimentaire est une pâte alimentaire à base de légumes.

3. Procédé selon la revendication 1 ou 2, dans lequel l'étape de fourniture d'une quantité de graines appartenant à au moins une espèce de légume comprend l'étape de fourniture d'une quantité de haricots blancs et/ou de haricots noirs et/ou de pois chiches et/ou de lentilles et/ou de doliques et/ou de fèves de soja.

4. Procédé selon l'une quelconque des revendications précédentes, dans lequel ladite étape de mélange de la farine avec de l'eau comprend l'étape de mélange, sur une période de temps entre 5 et 30 minutes, de la farine avec 20 à 40 % en poids d'eau micro-filtrée ayant une température entre 25 et 50 °C.

5. Procédé selon l'une quelconque des revendications précédentes, dans lequel l'étape d'extrusion de la pâte comprend l'étape d'extrusion au moyen d'un équipement comprenant principalement au moins un récipient d'extrusion et au moins une vis sans fin.

6. Procédé selon l'une quelconque des revendications précédentes, dans lequel l'étape de transformation du produit brut au moyen d'un pré-séchoir à secousses comprend l'étape de transformation au moyen d'un pré-séchoir à secousses ayant une température entre 25 et 60 °C.
